# FASCICULE DE BREVET EUROPEEN

(11) **EP 2 479 386 B1**
(45) Date de publication et mention de la délivrance du brevet: **01.04.2015**
(21) Numéro de dépôt: 12290020.2
(22) Date de dépôt: 17.01.2012
(51) Int. Cl.: F01D 17/10, F02K 9/86, F42B 10/66, F02K 9/80, B64G 1/26

(54) **Dispositif pour commander le passage d'un jet gazeux dans une tuyère d'engin volant, et engin volant comportant de tels dispositifs**
Vorrichtung zur Steuerung des Flusses eines Gasstroms durch eine Düse eines Fluggeräts, und mit solchen Vorrichtungen ausgestattetes Fluggerät
Device for controlling the passing of a gas jet in a jet nozzle of a flying vehicle, and flying vehicle comprising such devices

(30) Priorité: 20.01.2011 FR 1100171
(43) Date de publication de la demande: 25.07.2012
(73) Titulaire: MBDA France, 92350 Le Plessis-Robinson (FR)
(72) Inventeur: Rossi, Rinaldo, 75116 Paris (FR)
(74) Mandataire: Hauer, Bernard

(56) Documents cités:
- WO-A1-83/00721
- GB-A- 2 156 290
- US-A- 3 015 210
- US-A- 3 330 114
- US-B1- 6 598 385

## Description

La présente invention concerne un dispositif pour commander le passage d'un jet gazeux dans une tuyère d'un engin volant, tel qu'un missile, projectile ou analogue, à des fins de pilotage/guidage de celui-ci, ainsi qu'un engin volant comportant de tels dispositifs de commande.

On sait que, pour piloter et/ou guider un missile sur une trajectoire établie ou à venir, il est prévu, dans le cas présent, d'équiper celui-ci :
- de tuyères latérales généralement au nombre de quatre diamétralement opposées deux à deux, situées dans deux plans perpendiculaires et susceptibles d'être alimentées par des jets gazeux issus d'un générateur ; et
- de dispositifs de commande à moyen d'obturation mobile, en communication avec les tuyères, et selon la position du moyen d'obturation, fermant ou ouvrant plus ou moins le passage des jets gazeux dans les tuyères latérales concernées pour dévier ou recaler le missile sur la trajectoire souhaitée.

En effet, les jets gazeux engendrent alors des forces propulsives transversales aptes à infléchir la trajectoire du missile. Et, si les lignes d'action des forces propulsives passent par le centre de gravité du missile, l'on dit que celui-ci est piloté en force avec un temps de réponse à la commande particulièrement rapide. Dans le cas contraire, les forces propulsives transversales passent en des points de l'axe du missile différents du centre de gravité, en créant des moments permettant la commande du missile en attitude par rapport au centre de gravité, à la manière de surfaces (gouvernes) aérodynamiques.

Par ailleurs, le générateur de jets gazeux latéraux peut être le générateur de gaz de propulsion principal fournissant la poussée au missile à travers la tuyère axiale de celui-ci, ou un générateur de gaz auxiliaire spécialement prévu à cet effet dans le missile.

Les dispositifs de commande connus reposent notamment sur le déplacement linéaire ou angulaire du moyen d'obturation mobile dans la tuyère latérale correspondante, permettant, lorsqu'ils sont actionnés, l'ouverture et la variation de la section transversale de passage du jet gazeux dans le col de la tuyère. Ce moyen d'obturation est soumis à des efforts importants dus à la pression du jet gazeux, par ailleurs variable, avec le débit. Un moyen d'obturation à vérin est par exemple décrit dans le brevet US 2 540 594. Dans le cas où les dispositifs de commande nécessitent des dynamiques élevées de pilotage/guidage, les puissances pour déplacer le moyen d'obturation peuvent être importantes.

Actuellement, les dispositifs de commande de l'ouverture du passage du jet gazeux peuvent être, pour certains, du type tout ou rien à modulation de poussée par largeur d'impulsion (PWM) à actionnement de puissance pneumatique, comme décrit par exemple dans le brevet GB 2 156 290. La variation de la pression dans un actionneur pneumatique formant le moyen d'obturation s'effectue grâce à un clapet piloté par un électroaimant fonctionnant en tout ou rien, de sorte à avoir le passage d'une poussée nulle (tuyère latérale fermée par l'actionneur du dispositif) à une poussée maximale (tuyère latérale ouverte au maximun permettant le passage du jet gazeux, par le déplacement piloté de l'actionneur) et cela en un temps très court imposé par la dynamique de l'actionneur d'obturation.

Ce fonctionnement en tout ou rien entraîne inévitablement des chocs violents (variations de poussée très rapides) et des vibrations sur les structures et les équipements de l'engin volant à piloter, et ne permet pas, de plus, une régulation fine, précise et maîtrisée de la poussée latérale.

D'autres dispositifs de commande du type électromécanique utilisent des moteurs électriques associés à un réducteur ou autre équipement de transformation de mouvement mécanique pour commander la position du moyen d'obturation, c'est-à-dire de l'obturateur. Cependant, compte tenu des efforts et des puissances en jeu rencontrés, ce type de dispositifs de commande ne permet pas d'obtenir des performances dynamiques élevées sans avoir une masse et un encombrement significatifs, exagérés, comparativement au type de dispositifs précédents. WO8300721 A1 montre les caractéristiques techniques du préambule de la revendication indépendante 1.

La présente invention a pour but de remédier à ces inconvénients et concerne un dispositif de commande du passage d'un jet gazeux dans une tuyère pour le pilotage d'objets volants, dont la conception permet un déplacement linéaire et précis du moyen d'obturation depuis une position fermée de la tuyère obturant le jet gazeux, jusqu'à une position ouverte maximale libérant le jet gazeux, et, par voie de conséquence, la maîtrise de la poussée du jet gazeux de 0 à 100% de sa puissance. Et cela, sans avoir recours à des dispositifs brusques en tout ou rien, ou complexes, lourds et encombrants.

A cet effet, le dispositif pour commander le passage d'un jet gazeux dans une tuyère d'engin volant, du type comportant un moyen d'obturation mobile commandable à vérin linéaire dont la tige de piston porte un obturateur qui, selon sa position entre deux positions extrêmes respectivement ouverte maximale et fermée, commande le passage du jet gazeux à travers la tuyère, dispositif caractérisé par le fait que
- le piston dudit vérin linéaire partage le cylindre en deux chambres séparées, une chambre pressurisée alimentée directement par une partie du jet gazeux à travers au moins un orifice d'admission pour agir sur le piston, et une chambre à l'intérieur de laquelle se trouve un moyen élastique de rappel tel qu'un ressort agissant sur ledit piston ; et
- ledit moyen d'obturation comporte de plus un organe fluidique de modulation proportionnelle d'échappement en communication avec la chambre pressurisée du vérin linéaire par au moins un orifice d'échappement ménagé dans celui-ci, et agencé pour créer une fuite commandable qui permet, lorsque le jet gazeux est délivré, la régulation de la pression régnant dans la chambre pressurisée du vérin linéaire et le déplacement de l'obturateur par le moyen élastique dans l'autre chambre.

Avantageusement ledit organe de commande comporte un moteur de commande pour faire varier sa position et régler la fuite.

Ainsi, on obtient une régulation précise de la poussée (de 0 à 100% de celle-ci et non en tout ou rien) par l'intermédiaire de l'ensemble pneumatique réalisé (vérin et organe-moteur) qui fonctionne avec un effort minimal fourni par le moteur (pouvant être alors de faible puissance et donc de dimension réduite) sur l'organe fluidique pour moduler simplement la position de ce dernier par rapport à l'orifice d'échappement calibré (de faible section), ce qui permet de faire varier la pression dans le vérin. De là, l'obturateur, solidaire du déplacement de la tige de piston du vérin, ouvre plus ou moins la section de passage de la tuyère pour le jet gazeux. Et cela, à partir d'une puissance pneumatique ou source d'énergie « gratuite » prélevée directement sur les gaz provenant du générateur et dont une partie minime entre, par l'orifice d'admission calibré, dans le vérin et autoalimente la chambre de ce dernier en liaison avec l'organe fluidique dont l'action permet de réguler la pression dans le vérin et, simultanément, la position de l'obturateur dans la tuyère.

Par ailleurs, dans l'autre chambre du vérin, délimitée par le piston et opposée à la chambre pressurisée en liaison avec le jet gazeux, se trouve le moyen élastique de rappel, tel qu'un ressort, qui permet d'agir à l'encontre du piston et de rappeler élastiquement la tige de piston jusqu'à une position initiale lorsque la pression des gaz dans la chambre pressurisée du vérin cesse, et de minimiser les variations de raideur (induites par la pression pneumatique dans le vérin) vues par l'asservissement.

Avantageusement, le dispositif comporte un moyen de recopie du déplacement de l'obturateur du vérin linéaire en liaison avec ledit moteur de commande par l'intermédiaire d'une unité de traitement de manière à pouvoir contrôler la poussée du jet gazeux traversant la tuyère. Ainsi, une boucle d'asservissement est formée entre le vérin à obturateur et le moteur de l'organe de modulation, permettant de connaître la position de l'obturateur et, donc, l'ouverture de la section annulaire de passage des gaz dans la tuyère, si bien que la poussée est connue et peut être contrôlée aisément par l'asservissement réalisé.

Par exemple, à ladite unité de traitement, formant la boucle d'asservissement avec le vérin linéaire et le moteur de commande par le moyen de recopie, sont reliées une alimentation électrique et des liaisons transmettant des mesures de la pression des gaz du générateur et de la position commandée du piston du vérin.

Dans un mode particulier de réalisation, ledit moyen de recopie est à capteur mécanique, et comporte une barre de recopie intégrée coaxialement dans le vérin et solidaire de sa tige portant, à l'opposé, ledit obturateur. Cependant, on pourrait envisager un moyen de recopie par capteur magnétique, optique, etc.

Quant à l'organe fluidique, dans un mode préféré de réalisation, il comporte une bille en regard de l'orifice d'échappement et logée dans un corps, ladite bille étant déplaçable sous l'action du déplacement axial de la tige du moteur de commande pour moduler le passage du jet gazeux issu dudit orifice d'échappement du vérin, et réguler ainsi la pression de ce dernier, un trou d'évent étant prévu dans ledit corps pour évacuer le jet gazeux se trouvant dans celui-ci.

Du fait que l'effort pour déplacer la bille est minime en raison de la faible section offerte par celle-ci aux gaz entrant dans l'organe et s'appliquant sur la bille, ledit moteur de commande peut être de faible puissance et être un simple un moteur linéaire électrique, par exemple un moteur-force, rapporté fixement audit organe fluidique et dont l'arbre de commande agit sur la bille de façon diamétralement opposée à l'action du jet gazeux sur celle-ci pour moduler ainsi proportionnellement la pression d'échappement et, de là, la position de l'obturateur via le vérin. La compacité du dispositif de l'invention est ainsi réduite comparativement aux dispositifs électromécaniques usuels.

De façon à optimiser encore la compacité du dispositif, ledit organe fluidique et son moteur de commande sont fixés à l'extérieur du cylindre du vérin linéaire.

L'invention concerne également un engin volant, tel qu'un missile, comprenant une pluralité de tuyères latérales et une tuyère axiale susceptibles d'être traversées par les jets gazeux délivrés par un générateur de gaz, et pourvues de dispositifs de commande des jets gazeux traversant les tuyères. Avantageusement, ies dispositifs de commande sont tels que définis ci-dessus.

Les figures du dessin annexé feront bien comprendre comment l'invention peut être réalisée. Sur ces figures, des références identiques désignent des éléments semblables.

La figure 1 est une vue en perspective schématique d'un engin volant, tel qu'un missile, comportant des tuyères latérales avec, conformément à l'invention, des dispositifs de commande du jet gazeux intégrés dans celles-ci.

La figure 2 représente, en coupe axiale, l'un des dispositifs de commande pour le pilotage/guidage du missile, associé à la tuyère latérale correspondante.

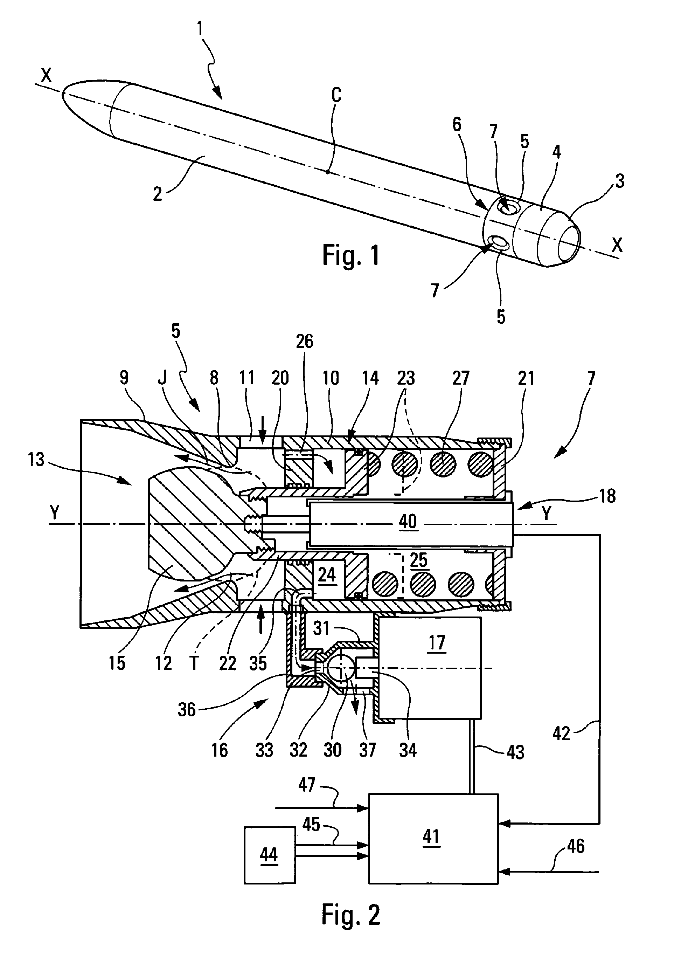

Le missile 1 schématisé sur la figure 1 comprend un corps allongé cylindrique 2 d'axe longitudinal X, se terminant par une tuyère axiale 3 traversée par le jet gazeux principal issu d'un générateur de gaz non représenté, interne au corps allongé 2, et imprimant la poussée au missile.

En périphérie arrière 4 du corps 2, proche de la tuyère axiale 3, sont prévues des tuyères latérales 5 deux à deux diamétralement opposées dans des plans perpendiculaires et formant un bloc annulaire de pilotage/guidage 6 du missile 1. Seules deux des tuyères latérales sont visibles sur la figure 1.

Pour information, les surfaces aérodynamiques (ailes, empennages, ...) du missile n'ont pas été représentées. En variante, sans sortir du cadre de l'invention, le missile peut être du type piloté en force de sorte que le bloc de pilotage 6 à tuyères latérales 5 se trouve alors en partie médiane du missile avec les lignes d'action des jets latéraux issus des tuyères passant par le centre de gravité C de celui-ci.

Les tuyères latérales 5 sont susceptibles d'être reliées au générateur de gaz principal alimentant la tuyère axiale 3 ou à un générateur auxiliaire spécifique prévu à cet effet non représenté. Dans les tuyères latérales 5 sont agencés des dispositifs 7 pour la commande du passage des jets gazeux dans les tuyères latérales, qui permettent, quand cela s'avère nécessaire et en agissant sur au moins l'un de ces dispositifs, de replacer le missile sur la trajectoire imposée ou de modifier celle-ci pour diverses raisons. Ces dispositifs de commande 7 par jets gazeux latéraux agissent donc à des fins de pilotage/guidage du missile 1.

L'un d'eux 7 est illustré en regard de la figure 2 en coopération avec la tuyère latérale correspondante 5. Celle-ci est de façon usuelle de forme cylindrique d'axe Y, avec un col interne 8 s'évasant d'un côté vers l'extérieur par une partie conique 9 et se prolongeant de l'autre côté par une partie cylindrique 10. Dans celle-ci et près du col interne sont ménagés des trous radiaux 11 pour que les gaz issus du générateur associé et formant le jet gazeux J traversent le passage 12 du col 8 de la tuyère par suite de la commande du dispositif 7.

Chaque tuyère latérale 5 est bien entendu fixée à l'intérieur du corps 2 du missile par tout moyen approprié usuel, non représenté.

Comme le montre la figure 2, le dispositif de commande 7 du passage du jet gazeux dans la tuyère 5 comporte un moyen d'obturation mobile commandable 13 qui comprend, dans l'exemple de réalisation illustré, un vérin linéaire 14 à obturateur 15 du col 8 de la tuyère 5, un organe fluidique déplaçable 16 de modulation proportionnelle d'échappement, en liaison avec le vérin 14 et soumis à l'action d'un moteur de commande 17 pour le déplacement de l'organe, et un moyen de recopie 18 de la position de l'obturateur 15 du vérin.

En particulier, le vérin linéaire 14 est pneumatique en étant alimenté par les gaz issus du générateur, et il est disposé selon l'axe Y de la tuyère. A cet effet, son cylindre correspond à la partie cylindrique du corps de tuyère 5 et porte ainsi la même référence numérique 10. Le cylindre 10 est fermé à ses extrémités par une paroi transversale 20 perpendiculaire à celui-ci et située près des trous radiaux 11, et par un fond transversal 21 fixé en bout du cylindre 10 par vissage.

La tige 22 du vérin 14 est montée de façon coulissante et étanche dans le cylindre 10 et la paroi transversale 20. Cette tige 22 se termine, du côté externe au cylindre, par l'obturateur 15 à tête sphérique (ou tout autre forme appropriée telle que conique) apte à s'appliquer contre le col 8 de la tuyère 5, en fermant le passage 12 du jet gazeux, ou à s'éloigner plus ou moins dudit col, en faisant varier l'ouverture dudit passage, et du côté interne, par un piston 23 séparant le cylindre en deux chambres variables 24 et 25. Du côté gauche du piston sur la figure 2 se trouve la chambre 24 en communication fluidique directe avec les gaz du générateur par un orifice d'admission calibré 26 ménagé dans la paroi transversale 20 du cylindre 10. Et du côté droit du piston se trouve la chambre 25 dans laquelle est agencé un ressort 27 ou tout autre élément à rappel élastique.

L'organe fluidique 16 de modulation proportionnelle d'échappement est de préférence une bille 30 logée dans un corps cylindrique creux 31 rapporté fixement à l'extérieur du cylindre. La bille peut se déplacer axialement à l'intérieur du corps entre un siège 32 à trou calibré 33 et la tige 34 du moteur associé 17. Pour cela, la bille 30 de l'organe fluidique 16 est en communication avec la chambre 24 du vérin par un orifice d'échappement calibré 35 prévu dans la paroi 20 du cylindre 10 et relié au trou calibré 33 du siège 32 par un raccord de liaison tubulaire 36, le trou 33 étant de préférence identique à l'orifice calibré 35.

Et dans le corps cylindrique 31 de l'organe fluidique 16 est ménagé un trou d'évent 37 pour l'échappement de la partie des gaz entrée dans la chambre 24 et circulant vers l'organe. Et cela à partir d'une puissance pneumatique prélevée directement sur les gaz délivrés par le générateur, à travers l'orifice d'admission calibré 26. Ce prélèvement de puissance ne représente qu'une très faible fraction des gaz de propulsion délivrés par le générateur, et à titre d'exemple, nettement moins de 1% de la puissance fournie, de sorte que, malgré ce prélèvement, le jet gazeux J sortant de la tuyère latérale 5 conserve toute son efficacité pour le pilotage du missile 1.

Par le moyen d'obturation commandable 13 à vérin 14 et à organe fluidique 16, le déplacement du piston 23, qui conditionne celui de l'obturateur 15 par rapport au col de la tuyère en modulant donc la section annulaire du passage 12 du jet gazeux J, est réalisé par la pression des gaz entrant et régnant dans la chambre 24, laquelle pression est modulée par la position de la bille 30 en communication avec la chambre 24 par 35, 36 et 33. Comme la pression ne s'exerce que sur une surface réduite de la bille 30 (quelques mm² ), celle-ci peut être pilotée axialement par un moteur 17 de faible puissance, tel qu'un moteur-force décrit, par exemple, dans le brevet FR 2 622 066 (figure 12). La puissance électrique nécessaire pour commander le moteur-force 17 est alors relativement faible (quelques watts) sans commune mesure avec la puissance fournie par le piston pour déplacer l'obturateur (quelques kilowatts).

Ainsi, la combinaison bille/moteur-force agit comme un amplificateur linéaire à gain très élevé (de l'ordre de 1000). Le fonctionnement du dispositif 7 sera décrit plus en détail ultérieurement.

Le moyen de recopie 18 est, dans l'exemple illustré sur la figure 2, du type mécanique à capteur de déplacement, étant entendu qu'il pourrait être du type sans contact à capteur optique, magnétique, etc... Pour cela, il comporte principalement une barre 40 montée axialement dans le cylindre 10 du vérin depuis le fond transversal 21 et traversant la tige creuse 22, jusqu'à se fixer, par vissage ou tout autre moyen de liaison, dans la tête sphérique de l'obturateur 15. La barre 40 suit ainsi le déplacement axial selon Y de l'obturateur et un capteur non représenté, associé à la barre, envoie les informations de déplacement à une unité de traitement 41 par une liaison 42.

A cette unité de traitement 41, formant l'électronique de commande et assurant l'asservissement du dispositif concerné 7, sont également reliés le moteur-force 17 par une liaison d'alimentation 43, et une alimentation électrique 44 par une liaison 45. Elle reçoit également les informations quant à la position commandée du piston et à la mesure de pression des gaz par des liaisons respectivement 46 et 47.

Si aucune poussée latérale n'est nécessaire au guidage du missile, les tuyères latérales 5 sont fermées par les obturateurs 15 des dispositifs 7 alors désactivés, par suite de l'action des gaz issus du générateur et pénétrant dans les tuyères par les trous 11. Les gaz entrent dans la chambre 24 de chacun des vérins 14 par l'orifice d'admission calibré 26 entraînant le déplacement du piston 23 vers la droite (représenté en trait pointillé sur la figure 2) et la compression du ressort 27. La pression dans la chambre est alors maximale. La bille 30, soumise à l'action du moteur de commande 17, s'applique sur le siège 32 du corps et ferme le trou d'échappement 33 (et donc l'orifice 35) maintenant le vérin 14 en position. De la sorte, l'obturateur 15 se trouve en position fermée (représentée par le trait pointillé T) et s'applique contre le col 8 de la tuyère, en empêchant le passage du jet gazeux J.

Lorsque la trajectoire du missile 1 doit être modifiée pour une quelconque raison, un ordre est donné pour agir sur la ou les tuyères concernées et, ainsi, piloter le missile pour le placer sur sa nouvelle trajectoire.

Pour cela, le dispositif de commande concerné 7 est mis sous tension par l'alimentation électrique 44, activant l'unité 41, le moteur 17, et les liaisons 42, 46, 47. Aussi, pour pouvoir régler précisément et modifier la position de l'obturateur (de la position fermée à une quelconque position ouverte), qui est fonction de celle du piston, et par voie de conséquence autoriser le passage souhaité du jet gazeux J à travers la tuyère 5 pour imprimer au missile 1 la force latérale nécessaire à sa nouvelle trajectoire, le dispositif 7 va réguler la pression des gaz avantageusement amenés dans la chambre 24 du vérin, par l'intermédiaire de la modulation en position de la bille 30 de l'organe fluidique 16 qui est agencé en dérivation par rapport au vérin.

Comme le montre la figure 2, la bille est en communication fluidique avec les gaz de la chambre 24 par l'orifice d'échappement calibré 35, le raccord tubulaire 36 et le trou 33 du corps de l'obturateur. Diamétralement opposé au trou, la bille 30 est soumise à l'action axiale de la tige 34 du moteur 17. De la sorte, elle peut être pilotée axialement en position par la tige 34 du moteur de commande 17 pour faire varier ainsi proportionnellement le passage des gaz entrant dans le corps par le trou d'échappement 33, c'est-à-dire leur débit, donc la pression, par la « fuite » créée par l'éloignement de la bille 30 par rapport à son siège 32. Les gaz sortent ensuite par le trou d'évent 37 à l'extérieur du dispositif 7. Les gaz s'échappant alors par le trou 33 pousse la bille 30 contre la tige commandée 34 et font chuter la pression régnant dans la chambre 24, si bien que le piston 23 est repoussé vers la gauche par l'action de rappel du ressort 27. Et l'obturateur 15 associé à la tige 22 du vérin s'éloigne du col 8 de la tuyère 5 pour prendre la position illustrée sur la figure 2, laissant le jet gazeux J traversé le passage 12 de la tuyère.

On comprend donc que, lorsque la bille 30 s'éloigne du trou 33 (par la rentrée de la tige 34 du moteur 17), le débit de passage des gaz arrivant de la chambre 24 par le trou 33 et sortant par le trou 37, augmente en proportion de sorte que la pression baisse davantage dans la chambre 24. Cela entraîne le déplacement de l'obturateur 15 vers la gauche (le passage de section annulaire du jet gazeux J augmentant). En revanche, lorsque la bille 30 est proche, voire au contact du trou 33, par la sortie de la tige 34 du moteur, le débit de passage des gaz par le trou 37 est faible ou nul, de sorte que la pression s'élève dans la chambre 24 poussant le piston 23 avec l'obturateur 15 vers la droite à l'encontre du ressort 27 (le passage de section annulaire du jet gazeux J diminuant).

Toute position intermédiaire de la bille est ainsi possible par la modulation de sa position entraînant la régulation de la pression dans le vérin, de sorte qu'on n'est nullement limité à des positions minimale (fermée) et maximale (ouverte) de l'obturateur. Le dispositif permet ainsi de maîtriser la vitesse de montée de la poussée (de 0 à 100%), d'améliorer les performances dynamiques et la précision de la régulation de la poussée, et finalement de piloter de façon optimale le missile.

On rappelle, par ailleurs, que l'alimentation du vérin s'effectue automatiquement et directement à partir des gaz engendrés par le générateur (sans autre organe de commande), et que le moteur linéaire est de faible puissance du fait que la pression des gaz sur la bille ne s'exerce que sur une petite surface de celle-ci (quelques mm²). Quelques watts suffisent à alimenter le moteur linéaire. Le dispositif de l'invention fonctionne donc avec une puissance contenue (moteur-force) sans commune mesure avec la puissance nécessaire pour les dispositifs électromécaniques antérieurs.

En conséquence, toute position de l'obturateur 15 par rapport au col 8 de la tuyère 5 (entre la position fermée et la position ouverte maximale) est obtenue de façon précise et proportionnelle à la modulation de l'échappement de l'organe fluidique 16 selon la position de la bille, pour délivrer la force latérale souhaitée, position pouvant bien entendu évoluer durant la manoeuvre de pilotage.

Quant au moyen de recopie 18, comme la barre 40 est solidaire de la tige à obturateur sphérique 15, il reproduit à l'identique les déplacements de ce dernier et, donc, sa position qui est ainsi connue précisément. On obtient au final un dispositif de commande 7 à moyen d'obturation mobile 13, asservi en position, ayant de plus une compacité appréciable du fait que la barre 40 est intégrée au vérin linéaire 14, et que l'organe fluidique 16 et son moteur 17 sont rapportés au cylindre 10 dudit vérin.

L'unité de traitement 41 gère le fonctionnement du dispositif 7 avec la boucle d'asservissement. A partir de la connaissance précise de la position de l'obturateur donnée par le moyen de recopie (barre dans l'exemple) et de la mesure de la pression des gaz de propulsion, on peut déterminer de façon précise le niveau de poussée traversant la tuyère en fonction de la position commandée de l'obturateur.

En conséquence, le dispositif de commande 7 de l'invention garantit un déplacement linéaire et précis de la position de l'obturateur et par suite la maîtrise de la poussée du jet gazeux de 0 à 100% de sa puissance. Par exemple, l'unité de traitement est de préférence une électronique de commande numérisée, basée sur un microcontrôleur ou un processeur de signaux numériques, mais peut être aussi une électronique analogique à amplificateurs opérationnels.

Pour information, la bande passante de l'asservissement est de l'ordre de plusieurs dizaines de Hertz.

Les avantages apportés par le dispositif de commande de l'invention sont notamment résumés (de manière non exhaustive) ci-après :
- compacité par intégration des composants constituant l'asservissement (vérin linéaire pneumatique à obturateur, organe de modulation fluidique et son moteur associé, moyen de recopie) ;
- masse réduite comparativement faible par rapport aux dispositifs antérieurs en particulier ceux actionnés par des moteurs électriques de forte puissance ;
- puissance de fonctionnement du vérin fournie directement par emprunt d'une fraction des gaz de propulsion délivrés par le générateur,
- énergie électrique réduite du moteur-force pour le pilotage de l'organe de modulation ;
- unité de traitement (électronique de puissance) miniaturisée, ne nécessitant pas de source de puissance spécifique ;
- bande passante importante (plusieurs dizaines de Hertz) en raison des faibles masses mobiles et des efforts importants fournis par la pression des gaz de propulsion.

Pour rappel, le dispositif de commande de l'invention peut s'appliquer également au pilotage en force de missiles, au contrôle vectoriel de poussée (axiale), au pilotage/guidage d'engins aériens en l'absence de pression dynamique, etc....

## Revendications

1. Dispositif pour commander le passage d'un jet gazeux dans une tuyère d'engin volant, du type comportant un moyen d'obturation mobile commandable (13) à vérin linéaire (14) dont la tige de piston porte un obturateur qui, selon sa position entre deux positions extrêmes respectivement ouverte maximale et fermée, commande le passage du jet gazeux à travers la tuyère, dispositif **caractérisé par le fait** que
- le piston (23) dudit vérin linéaire partage le cylindre en deux chambres séparées, une chambre pressurisée (24) alimentée directement par une partie du jet gazeux à travers au moins un orifice d'admission (26) pour agir sur le piston (23), et une chambre (25) à l'intérieur de laquelle se trouve un moyen élastique de rappel tel qu'un ressort (27) agissant sur ledit piston ; et
- ledit moyen d'obturation comporte de plus un organe fluidique de modulation proportionnelle d'échappement (16) en communication avec la chambre pressurisée (24) du vérin linéaire (14) par au moins un orifice d'échappement (35) ménagé dans celui-ci, et agencé pour créer une fuite commandable qui permet, lorsque le jet gazeux est délivré, la régulation de la pression régnant dans la chambre pressurisée du vérin linéaire et le déplacement de l'obturateur par le moyen élastique dans l'autre chambre.

2. Dispositif selon la revendication 1,
**caractérisé par le fait que** ledit organe de commande (16) comporte un moteur de commande (17) pour faire varier sa position et régler la fuite.

3. Dispositif selon l'une des revendications 1 ou 2,
**caractérisé par le fait que** ledit organe fluidique (16) comporte une bille (30) en regard de l'orifice d'échappement (35) et logée dans un corps (31), ladite bille étant déplaçable sous l'action du déplacement axial de la tige (34) du moteur de commande (17) pour moduler par la fuite le passage du jet gazeux issu dudit orifice d'échappement du vérin et réguler la pression dans ce dernier, un trou d'évent (37) étant prévu dans ledit corps pour évacuer le jet gazeux se trouvant dans celui-ci.

4. Dispositif selon la revendication 3,
**caractérisé par le fait que** ledit moteur de commande (17) est un moteur linéaire électrique rapporté fixement audit organe fluidique (16) et dont l'arbre de commande (34) agit sur la bille (30) de façon diamétralement opposée à l'action du jet gazeux sur celle-ci.

5. Dispositif selon l'une des revendications 2 à 4,
**caractérisé par le fait que** ledit organe fluidique (16) et son moteur de commande (17) sont fixés à l'extérieur du cylindre (10) du vérin linéaire (14).

6. Dispositif selon l'une des revendications 1 à 5,
**caractérisé par le fait qu'**il comporte un moyen de recopie (18) du déplacement de l'obturateur (15 du vérin linéaire avec ledit moteur de commande (17) par l'intermédiaire d'une unité de traitement (41), de manière à pouvoir contrôler la poussée du jet gazeux traversant la tuyère.

7. Dispositif selon la revendication 6,
**caractérisé par le fait que**, à ladite unité de traitement (41) formant la boucle d'asservissement avec le vérin linéaire (14) et le moteur de commande (17) par le moyen de recopie (18), sont reliées une alimentation électrique (44) et des liaisons transmettant des mesures de la pression des gaz du générateur et de la position commandée du piston du vérin.

8. Dispositif selon l'une des revendications 6 ou 7,
**caractérisé par le fait que** ledit moyen de recopie (18) est à capteur mécanique, et comporte une barre de recopie (40) intégrée coaxialement dans le vérin (14) et solidaire de sa tige portant, à l'opposé, ledit obturateur.

9. Engin volant, tel qu'un missile, comprenant une pluralité de tuyères latérales (5) et une tuyère axiale (6) susceptibles d'être traversées par les jets gazeux délivrés par un générateur de gaz, et pourvues de dispositifs de commande (7) des jets gazeux traversant les tuyères latérales et/ou axiale, **caractérisé par le fait qu'**il comporte les dispositifs de commande (7) tels que définis selon l'une des revendications précédentes.

## Patentansprüche

1. Vorrichtung zum Steuern des Durchgangs eines gasförmigen Strahls in einem Strahlrohr eines Fluggeräts des Typs, der ein bewegliches steuerbares Verschlussmittel (13) mit linearem Stellglied (14) aufweist, dessen Kolbenschaft einen Verschluss trägt, der, je nach seiner Position zwischen einer jeweiligen maximal offenen und einer geschlossenen Endpositionen den Durchgang des gasförmigen Strahls durch das Strahlrohr steuert, Vorrichtung **gekennzeichnet dadurch**, dass
- der Kolben (23) des linearen Stellglieds den Zylinder in zwei getrennte Kammern teilt, eine mit Druck beaufschlagte Kammer (24), die direkt von einem Teil des gasförmigen Strahls durch mindestens eine Einlassöffnung (26) versorgt wird, um auf den Kolben (23) einzuwirken, und eine Kammer (25) in deren Innerem sich ein elastisches Rückstellmittel, wie zum Beispiel eine Feder (27) befindet, die auf den Kolben einwirkt, und
- das Verschlussmittel außerdem ein Fluidorgan zum anteilmäßigen Modulieren des Auslasses (16) in Kommunikation mit der mit Druck beaufschlagten Kammer (24) des linearen Stellglieds (14) durch mindestens eine Auslassöffnung (35), die in diesem eingerichtet ist, aufweist und eingerichtet ist, um ein steuerbares Leck zu schaffen, das, wenn der gasförmige Strahl abgegeben wird, das Regeln des Drucks, der in der mit Druck beaufschlagten Kammer des linearen Stellglieds herrscht, und die Bewegung des Verschlusses durch das elastische Mittel in der anderen Kammer erlaubt.

2. Vorrichtung nach Anspruch 1,
**dadurch gekennzeichnet, dass** das Steuerorgan (16) einen Steuermotor (17) zum Variieren seiner Position und Regeln des Lecks aufweist.

3. Vorrichtung nach einem der Ansprüche 1 oder 2,
**dadurch gekennzeichnet, dass** das Fluidorgan (16) eine Kugel (30) gegenüber der Auslassöffnung (35) und in einem Körper (31) untergebracht aufweist, wobei die Kugel unter der Einwirkung der axialen Bewegung des Schafts (34) des Steuermotors (17) beweglich ist, um durch das Leck den Durchgang des gasförmigen Strahls, der aus der Auslassöffnung des Zylinders stammt, zu modulieren und den Druck in diesem Letzteren zu regeln, wobei ein Entlüftungsloch (37) in dem Körper vorgesehen ist, um den gasförmigen Strahl, der sich in diesem befindet, abzuleiten.

4. Vorrichtung nach Anspruch 3
**dadurch gekennzeichnet, dass** der Steuermotor (17) ein linearer Elektromotor ist, der stationär an das Fluidorgan (16) angebaut ist und dessen Steuerwelle (34) auf die Kugel (30) diametral der Wirkung des gasförmigen Strahls auf dieser entgegengesetzt wirkt.

5. Vorrichtung nach einem der Ansprüche 2 bis 4,
**dadurch gekennzeichnet, dass** das Fluidorgan (16) und sein Steuermotor (17) außerhalb des Zylinders (10) des linearen Stellglieds (14) befestigt sind.

6. Vorrichtung nach einem der Ansprüche 1 bis 5,
**dadurch gekennzeichnet, dass** sie ein Mittel zum Kopieren (18) der Bewegung des Verschlusses (15) des linearen Stellglieds mit dem Steuermotor (17) über eine Verarbeitungseinheit (41) derart aufweist, dass der Schub des gasförmigen Strahls, der das Strahlrohr durchquert, gesteuert werden kann.

7. Vorrichtung nach Anspruch 6,
**dadurch gekennzeichnet, dass** mit der Verarbeitungseinheit (41), die die Steuerschleife mit dem linearen Stellglied (14) und dem Steuermotor (17) durch das Kopiermittel (18) bildet, eine Stromversorgung (44) und Verbindungen verbunden sind, die Messungen des Drucks der Gase des Generators und der gesteuerten Position des Kolbens des Stellglieds übertragen.

8. Vorrichtung nach einem der Ansprüche 6 oder 7,
**dadurch gekennzeichnet, dass** das Kopiermittel (18) einen mechanischen Fühler hat und eine Kopierstange (40) aufweist, die koaxial in dem Stellglied (14) integriert und mit dessen Schaft, der auf der entgegengesetzten Seite den Verschluss trägt, fest verbunden ist.

9. Fluggerät, wie zum Beispiel eine Rakete, das eine Mehrzahl seitliche Strahlrohre (5) und ein axiales Strahlrohr (6) aufweist, die von den gasförmigen Strahlen durchquert werden können, die von einem Gasgenerator erzeugt werden, und die mit Steuervorrichtungen (7) der gasförmigen Strahlen, die die seitlichen und/oder den axialen Strahl durchqueren, versehen sind,
**dadurch gekennzeichnet, dass** es Steuervorrichtungen (7) nach einem der vorhergehenden Ansprüche aufweist.

## Claims

1. Device for controlling the flow of a gas jet in a projectile nozzle, of the type comprising a controllable movable sealing means (13) having a linear actuator (14), the piston rod of which carries a stopper which, depending on its position between two end positions which are open to a maximum and closed, respectively, controls the flow of the gas jet through the nozzle, said device being **characterised in that**
- the piston (23) of said linear actuator divides the cylinder into two separate chambers, one pressurised chamber (24) fed directly by one portion of the gas jet through at least one inlet opening (26) in order to act on the piston (23) and one chamber (25) inside which there is a resilient restoring means such as a spring (27) acting on said piston, and
- said sealing means further comprises a fluid member (16) which is intended for proportionally modulating outflow and is in communication with the pressurised chamber (24) of the linear actuator (14) by at least one outflow opening (35) which is made therein and arranged to create a controllable escape which, when the gas jet is provided, allows the pressure prevailing in the pressurised chamber of the linear actuator to be regulated and the stopper to be moved by the resilient means in the other chamber.

2. Device according to claim 1, **characterised in that** said control member (16) comprises a servomotor (17) for changing the position thereof and for regulating the escape.

3. Device according to either claim 1 or claim 2, **characterised in that** said fluid member (16) comprises a ball (30) which faces the outflow opening (35) and is housed in a body (31), said ball being movable under the action of the axial movement of the rod (34) of the servomotor (17) in order to modulate, by means of the escape, the flow of the gas jet from said outflow opening in the actuator and to regulate the pressure therein, a vent hole (37) being provided in said body for discharging the gas jet located therein.

4. Device according to claim 3, **characterised in that** said servomotor (17) is a linear electric motor which is fixedly connected to said fluid member (16) and the drive shaft (34) of which servomotor acts on the ball (30) in a manner diametrically opposed to the action of the gas jet thereon.

5. Device according to any of claims 2 to 4, **characterised in that** said fluid member (16) and its servomotor (17) are fixed to the outside of the cylinder (10) of the linear actuator (14).

6. Device according to any of claims 1 to 5, **characterised in that** it comprises a means (18) for repeating the movement of the stopper (15) of the linear actuator with said servomotor (17) by means of a processing unit (41), so as to control the pressure of the gas jet passing through the nozzle.

7. Device according to claim 6, **characterised in that** a power supply (44) and connections which transmit the measurements of the pressure of the gases from the generator and of the controlled position of the actuator piston are connected to said processing unit (41), which forms the control loop with the linear actuator (14) and the servomotor (17) by means of the repetition means (18).

8. Device according to either claim 6 or claim 7, **characterised in that** said repetition means (18) is of the mechanical sensor type and comprises a repetition bar (40) integrated coaxially in the actuator (14) and rigidly connected to the rod thereof which carries said stopper on the opposite side.

9. Projectile, such as a missile, comprising a plurality of lateral nozzles (5) and an axial nozzle (6) through which the gas jets provided by a gas generator are capable of passing and which are provided with devices (7) for controlling the gas jets passing through the lateral and/or axial nozzles, **characterised in that** said projectile comprises the control devices (7) according to any of the preceding claims.
